# EUROPÄISCHE PATENTANMELDUNG

(11) **EP 3 357 570 A1**
(43) Veröffentlichungstag der Anmeldung: **08.08.2018**
(21) Anmeldenummer: 17154912.4
(22) Anmeldetag: 07.02.2017
(51) Int. Cl.: B01J 3/00, A62C 3/00, A62C 3/04

(54) **VERFAHREN ZUR HANDHABUNG DEFLAGRATIONSFÄHIGER FESTSTOFFE**

(71) Anmelder: Bayer Aktiengesellschaft, 51373 Leverkusen (DE); Bundesanstalt für Materialforschung und -prüfung, 12205 Berlin (DE)
(72) Erfinder: Morhenn, Heinrich, 50829 Köln (DE); Salg, Steffen, 12205 Berlin (DE)
(74) Vertreter: BIP Patents

(57) **Zusammenfassung**

Die Erfindung betrifft ein Verfahren zur Verarbeitung und / oder Handhabung von deflagrationsfähigen Feststoffen und/oder Gemischen, insbesondere zur Verarbeitung deflagrationsfähiger Stoffe in der chemischen und pharmazeutischen Industrie, wobei die Verarbeitung und / oder Handhabung in einer Umgebung unter reduziertem Druck von <500 mbara erfolgt und eine Aufhebung des reduzierten Drucks zeitlich verzögert nach Abschalten möglicher mechanische Zündquellen erfolgt und , wobei die Verarbeitung und / oder Handhabung ein oder mehrere Verfahrensschritten umfasst, selektiert aus einer Gruppe umfassend Filtration, Mahlen, Sieben, Mischen, Homogenisieren, Granulieren, Kompaktieren, Abfüllen, Trocknen, Lagern und Transport in einem Transportbehälter sowie sonstigen Schritten in Apparaten mit mechanischen Einbauten.

## Beschreibung

Die Erfindung betrifft ein Verfahren zur Verarbeitung und/oder Handhabung von deflagrationsfähigen Feststoffen und/oder Gemischen, insbesondere zur Verarbeitung deflagrationsfähiger Stoffe in der chemischen und pharmazeutischen Industrie, wobei die Verarbeitung und/oder Handhabung in einer Umgebung unter reduziertem Druck erfolgt und die Aufhebung des reduzierten Drucks mit zeitlichem Abstand nach dem Abschalten möglicher Zündquellen erfolgt.

Die Technische Regel für Anlagensicherheit (TRAS) Nr. 410 definiert eine Deflagration wie folgt:

"Eine Deflagration ist eine Reaktion, die an einer vorgegebenen Stoffmenge örtlich begrenzt auslösbar ist und die sich von dort selbständig durch die gesamte Stoffmenge hindurch in Form einer Reaktionsfront fortpflanzt. Die Fortpflanzungsgeschwindigkeit der Reaktionsfront ist niedriger als die Schallgeschwindigkeit im Stoff. Bei einer Deflagration können große Mengen an heißen Gasen freigesetzt werden, die unter Umständen auch brennbar sind. Die Deflagrationsgeschwindigkeit nimmt mit der Temperatur und in der Regel auch mit dem Druck zu".

Deflagrationsfähige Feststoffe zersetzen sich nach lokaler Einwirkung einer hinreichend starken Zündquelle (Initiierung) auch ohne Anwesenheit von Luftsauerstoff. Im Gegensatz zu einem Brand oder einer Explosion eines Luft/Gas oder Luft/Staubgemisches kann eine Deflagration nicht durch Sauerstoffausschluss unterbunden werden. Die aus dem Explosionsschutz bekannte Maßnahme der Inertisierung mit Stickstoff oder anderen inerten Gasen bietet keinen Schutz vor einer Deflagration.

Explosionen sind schnelle Deflagrationen mit sprunghaftem Druck- und Temperaturanstieg. Bei Überschreiten der Schallgeschwindigkeit geht eine Deflagration in eine Detonation über.

Bei den deflagrationsfähigen Stoffen handelt es sich zumeist um organische oder anorganische Verbindungen in fester Form. Insbesondere neigen zur Deflagration organische Verbindungen mit funktionellen Gruppen wie Kohlenstoff-Kohlenstoff Doppel- und Dreifachbindungen wie Acetylene, Acetylide, 1,2-Diene; gespannte Ringverbindungen wie Azirine oder Epoxide; Verbindungen mit aneinander grenzenden N-Atomen wie Azo- und Diazoverbindungen, Hydrazine, Azide; Verbindungen mit aneinander grenzenden O-Atomen wie Peroxiden und Ozoniden; Sauerstoff-Stickstoff-Verbindungen wie Hydroxylamine, Nitrate, N-Oxide, 1,2 Oxalate, Nitro- und Nitroso-Verbindungen; Halogen-Stickstoffverbindungen wie Chloramine und Fluoramine, Halogen-Sauerstoffverbindungen wie Chlorate, Perchlorate, Jodosyl-Verbindungen; Schwefel-Sauerstoff-Verbindungen wie Sulphonylhalide, Sulphonylcyanide, und Verbindungen mit Kohlenstoff-Metall-Bindungen und Stickstoff-Metall-Bindungen wie Grignard-Reagenzien oder Organo-Lithium-Verbindungen. Jedoch können auch viele andere organische Verbindungen ohne die genannten funktionellen Gruppen und eine Vielzahl anorganischer Verbindungen deflagrationsfähig sein.

Grundsätzlich gelten alle Stoffe mit einer Zersetzungsenthalpie von größer oder gleich 500 J/g als potentiell deflagrationsfähig. Es sind auch Stoffe mit Zersetzungsenthalpie von 300 - 500 J/g bekannt, welche deflagrationsfähig sind.

Die Deflagrationsfähigkeit einer Substanz muss im Einzelfall gesondert ermittelt werden.

Zur Prüfung des Deflagrationsverhaltens von Stoffen und Stoffgemischen sind verschiedene Prüfmethoden bekannt.

In dem UN Prüfbuch "Transportation of Dangerous Goods, Manual of Tests and Criteria", 5th Revised Edition, 2009, werden in Sektion 23 (S 237 ff) 2 Prüfmethoden zur Ermittlung der Deflagrationsfähigkeit beschrieben.

In dem Test C.1 ("Time/Pressure Test") werden 5 g der zu prüfenden Substanz in einem Druckgefäß mit ca. 17 ml Inhalt gezündet. Kriterien für die Bewertung sind die Erreichung eines Grenzdrucks von ca. 20,7 barü (barü = Bar Überdruck), sowie die Zeit nach Zündung, in welcher der Grenzdruck erreicht wird.

Die Deflagrationsfähigkeit wird im Test C.1 wie folgt beurteilt:
- Ja, schnell deflagrationsfähig, wenn der Druck innerhalb des Druckgefäßes nach Zündung in weniger von 30 Sekunden von 6,90 barü auf 20,70 barü ansteigt.
- Ja, langsam deflagrationsfähig, wenn der Druck innerhalb des Druckgefäßes nach Zündung in 30 Sekunden oder länger von 6,90 barü auf 20,70barü ansteigt.
- Nicht deflagrationsfähig, wenn der Grenzdruck von 20,70 barü nicht erreicht wird.

In dem Test C.2 wird eine Probe in ein Dewar-Gefäß mit etwa 48 mm innerem Durchmesser und einer Höhe von 180 - 200 mm gefüllt. Das Gemisch wird mit einer offenen Flamme gezündet.

Die Deflagrationsfähigkeit wird im Test C.2 wie folgt beurteilt:
- Ja, schnell deflagrationsfähig, wenn die Deflagrationsgeschwindigkeit größer 5 mm/sec ist.
- Ja, langsam deflagrationsfähig, wenn die Deflagrationsgeschwindigkeit zwischen 0,35 mm/sec bis 5 mm/sec liegt.
- Nicht deflagrationsfähig, wenn die Deflagrationsgeschwindigkeit kleiner 0,35 mm/sec ist, oder die Reaktion vor Erreichen der unteren Marke verlöscht.

Insgesamt wird eine Substanz als nicht deflagrationsfähig eingestuft, wenn die Substanz im Test C.1 nicht als "schnell deflagrationsfähig" und im Test C.2 als nicht deflagrationsfähig klassifiziert wurde.

Ein weiterer Test zur Ermittlung der Deflagrationsfähigkeit ist in VDI2263-1 (1990, S. 13 ff.) beschrieben. In der Prüfung nach VDI2263-1 wird eine Substanz in ein unten geschlossenes Glasrohr mit ca. 5 cm Durchmesser gefüllt, in welchem in verschiedenen Höhen radial versetzt mehrere Thermoelemente angebracht sind. Nach örtlicher Initiierung (Zündung) durch eine Glühwendel, eine Glühkerze, einen Mikrobrenner oder eine Zündmischung aus Blei(IV)-Oxid und Silizium wird die Fortschreitung der Zersetzung ermittelt. Die Initiierung erfolgt von oben und vom Boden der Schüttung aus. Breitet sich die Zersetzung in wenigstens einem der Versuche (Zündung von oben und Zündung von unten) aus, so gilt der Stoff als deflagrationsfähig. Als Zündquellen können Glühwendel, Glühkerze, Mikrobrenner oder eine Zündmischung (Silizium/Bleioxid im Verhältnis 3:2) verwendet werden. Die Einwirkdauer und der Energieeintrag der Zündquellen sind nicht weiter definiert. In der Standardausführung nach VDI2263-1 wird das Deflagrationsverhalten bei Umgebungstemperatur und -druck gemessen. Es kann aber auch bei erhöhter Temperatur und im geschlossenen Gefäß gemessen werden.

Es ist bekannt, dass viele Stoffe sich in dem Test nach VDI2263-1 ohne die Ausbildung einer geschlossenen Front und auch nicht vollständig zersetzen. Häufig kommt es innerhalb der Schüttung zur Bildung von Kanälen, in deren Inneren die Zersetzung fortschreitet, während das umgebende Material sich nicht zersetzt. Ein solches Verhalten bedeutet aber für die Verarbeitung eines Stoffes ein Gefährdungspotential. Der Fachmann wird für die Prüfung des Deflagrationsverhaltens eines Stoffes oder Stoffgemisches die Parameter so auswählen, dass die Situation während der Verarbeitung am besten wiedergegeben wird. So wird eine Substanz für den Test nach VDI2263-1 auf die Temperatur gebracht werden, bei welcher auch die Verarbeitung der Substanz erfolgt. Bezüglich der Zündquelle kann man davon ausgehen, dass keine Deflagrationsfähigkeit vorliegt, wenn nach 300 Sekunden Einwirkzeit bei einer Temperatur > 600 °C, zum Beispiel durch eine Glühwendel oder eine Glühkerze, letztere bei einer Energieaufnahme von 40 W, noch keine Fortschreitung der Reaktion zu beobachten ist. Bei der Fortschreitung der Reaktion ist jede Art der Fortführung der Zersetzung, welche sich durch die Schüttung fortpflanzt, als Zeichen für ein Deflagrationsverhalten zu werten, auch wenn eine Kanalbildung vorliegt und die Schüttung nicht in voller Breite unter Ausbildung einer Zersetzungsfront durchreagiert.

In VDI-Bericht 975 (1992) Seite 99 ff wird eine Klassierung deflagrationsgefährlicher pulverförmiger Stoffe beschrieben. Die deflagrationsfähigen Stoffe werden in 3 Gefahrenklassen eingeteilt. Während Stoffe der Gefahrenklasse 3 grundsätzlich nicht in Apparaten mit mechanischen Einbauten verarbeitet werden dürfen, können Stoffe der Gefahrenklassen 1 und 2 unter gewissen Voraussetzungen in Apparaten mit mechanischen Einbauten verarbeitet werden.

Die Herstellung von deflagrationsfähigen Feststoffen erfolgt mit den üblichen, aus der organischen und anorganischen Chemie bekannten Verfahrensschritten. Meist werden Einsatzstoffe in flüssiger Form oder in Form von Lösungen miteinander zur Reaktion gebracht, der gewünschte Stoff fällt üblicherweise als Feststoff aus. Dieser wird dann von den verbliebenen flüssigen Komponenten abgetrennt, und steht nach eventuell weiteren Reinigungsschritten, Trocknung und Zwischenlagerung in gewünschter Form für die Abfüllung und den Transport zu den Abnehmern zu Verfügung. Gegebenenfalls wird der gewünschte Stoff weiter verarbeitet und zum Beispiel gemahlen und/oder mit anderen Komponenten vermischt.

Die Herstellung von deflagrationsfähigen Feststoffen im Labormaßstab ist in der Regel unproblematisch. Die gehandhabten Mengen sind klein, die Wahrscheinlichkeit der Initiierung einer Deflagration ist gering, eventuell auftretende Deflagrationen werden schnell erkannt und selbst bei Nichterkennen und Fortschreiten einer Deflagration ist das Schadensausmaß gering.

Problematisch ist jedoch die Herstellung deflagrationsfähiger Stoffe in größeren Mengen wie sie in einem Technikumsbetrieb oder in einem Produktionsbetrieb erfolgt. Hierbei kommen eine Reihe von Apparaten zum Einsatz, welche einerseits potentielle Zündquellen aufweisen, und bei welchen andererseits auf Grund der gehandhabten Mengen eine nicht oder zu spät detektierte Deflagration zu großen Schäden führen kann.

Apparate in Technika und Produktionsbetrieben sind häufig mit mechanischen Einrichtungen bestückt, welche dem Transport, der Durchmischung, der Erneuerung der Oberfläche oder andern Zwecken dienen.

So werden zum Beispiel für die Homogenisierung von Feststoffen Mischer mit bewegten mechanischen Elementen wie zum Beispiel Pflugscharmischer oder Schneckenmischer eingesetzt. Es ist bekannt, dass die mechanischen Einrichtungen eine der häufigsten Ursachen für die Initiierung einer Deflagration sind. So kann bei einer Störung ein bewegtes Mischelement in direkten Kontakt mit dem Apparatemantel kommen, an der Reibungsstelle erfolgt eine lokalen Erhitzung, welche den umgebenden Stoff zur Zersetzung bringen und so eine Deflagration initiieren kann. Es sind ebenfalls Fälle bekannt, bei welchen ein Fremdkörper, zum Beispiel eine Schraube, in einen Apparat gelangt war, dort zwischen Wandung und Rühr-/Mischorgan gelangte und durch die Erhitzung eine Deflagration auslöste. Selbst durch Reiben harter Krusten oder durch Reibung in einer verstopften Förderschnecke ist es zur Auslösung von Deflagrationen gekommen. Auch ist bekannt, dass Deflagrationen von einem Apparat in den anderen übertragen werden können. So kann in einem Mischer eine eingeschleppte Schraube in der beschriebenen Weise durch Reibung erhitzt werden. Die heiße Schraube wird dann zum Beispiel in ein Silo ohne mechanische Einbauten ausgetragen. Die Temperatur der Schraube kann noch hinreichend hoch sein, um in dem Silo die umgebende Substanz zur Zersetzung zu bringen und so eine Deflagration auszulösen. In gleicher Weise können Agglomerate, in welchen bereits eine deflagrative Zersetzung ausgelöst wurde, in einen Apparat ohne mechanische Einbauten ausgetragen werden und dort die deflagrative Zersetzung des Apparateinhalts initiieren.

Es ist eine Reihe von Maßnahmen bekannt, welche eine sichere Verarbeitung deflagrationsfähiger Stoffe ermöglichen.

Im VDI-Bericht 975 (1992) Seite 99 ff wird eine Systematik dargelegt, wie bei der Beurteilung und Auswahl von Maßnahmen bei der Verarbeitung von deflagrationsgefährlichen pulverförmigen Stoffen vorzugehen ist. In dem Bericht wird eine Klassierung der deflagrationsfähigen Stoffe in 3 Gefahrenklassen beschrieben, wobei Stoffe in der Gefahrenklasse 3 das höchste Gefährdungspotential aufweisen und Stoffe in der Gefahrenklasse 1 das niedrigste Gefährdungspotential. Entsprechend der Gefährdungsklasse werden geeignete Verarbeitungsverfahren aufgeführt. Obwohl die in der genannten Veröffentlichung genannten Kriterien keine allgemeine Gültigkeit haben, stellt die in dieser Veröffentlichung dargelegte Systematik einen guten Ansatz dar, wie bei der Beurteilung und Verarbeitung von deflagrationsfähigen Stoffen vorzugehen ist. Weitere Beispiele für eine sichere Verarbeitung deflagrationsfähiger Stoffe finden sich auch in dem VDI-Bericht 1272 (1996), Seite 441 ff. Bei Stoffen mit einer hohen Deflagrationsneigung wird darauf geachtet, dass die Verarbeitung ohne mechanische Einwirkungen erfolgt. Dies geschieht beispielsweise dadurch, dass eine Trocknung auf einzelnen Tabletts in einem Trockenschrank erfolgt, statt in einem Trockner mit mechanischen Einbauten wie zum Beispiel einem Schaufeltrockner. Die Verarbeitung ohne mechanische Einrichtungen ist jedoch sehr aufwändig. Vielfach muss der Stofftransport manuell erfolgen, was neben dem hohen Aufwand auch zur Gesundheitsgefährdung des Bedienpersonals und zu Qualitätsproblemen führen kann. Die Verarbeitung ohne mechanische Einrichtung und wird nur dann in Betracht kommen, wenn eine sichere Verarbeitung mit mechanischen Einrichtungen nicht möglich ist. In der zuvor zitierten Veröffentlichung im VDI-Bericht 975 (1992) Seite 99 ff sind zum Beispiel bei den Stoffen der Gefährdungsklasse 3 nur Verarbeitungsverfahren ohne mechanische Einrichtung vorgesehen.

Für Stoffe, bei welchen das Gefährdungspotential durch Deflagration weniger ausgeprägt ist, können unter bestimmten Bedingungen auch mit mechanischen Einrichtungen verarbeitet werden. In der zitierten Veröffentlichung VDI-Bericht 975 (1992) Seite 99 ff gilt dies für Stoffe der Gefahrenklassen 1 und 2.

Ein gängiges Verfahren zur Vermeidung von Deflagrationen ist die sorgfältige Vermeidung des Eintrags von Fremdkörpern. Dies kann zum Beispiel durch eine Metallabscheidung erfolgen, welche vor den Eintrag in den Apparat erfolgt und das Mitschleppen von Schrauben und anderen metallischen Fremdkörpern in den Verarbeitungsschritt verhindert.

Auch kann beim Bau der Apparate auf die Vermeidung möglicher Zündquellen geachtet werden, zum Beispiel, in dem die Abstände zwischen mechanischem Mischer und Wandung groß gewählt werden.

Die genannten Verfahren der Zündquellenvermeidung können das Risiko einer Deflagration deutlich mindern, ausschließen lässt sich die Deflagration hierdurch aber nicht. Die genannten Methoden sind zudem aufwändig und in manchen Fällen mit einer Beeinträchtigung der Leistung der Apparate verbunden.

Ein weiteres bekanntes Verfahren zur sicheren Verarbeitung von deflagrationsfähigen Substanzen besteht darin, den bei einer Deflagration entstehenden Druck bzw. die bei der Deflagration entstehenden Gase sicher abzuführen. Dies kann zum Beispiel durch Einbau entsprechend dimensionierter Berstscheiben und entsprechender Ableiteinrichtungen erfolgen. Hierbei ist zu beachten, dass die Deflagrationsgeschwindigkeit mit steigendem Druck zunimmt, Ansprechdruck und Ableitung sind entsprechend auszulegen. Auch ist darauf zu achten, dass mitgerissene Substanzen an einer Fortführung der Deflagration gehindert werden müssen. Dies kann zum Beispiel durch Einleitung der abgeführten Gase in ein Wasserbad erfolgen.

Ein weiteres bekanntes Verfahren zur sicheren Verarbeitung von deflagrationsfähigen Substanzen besteht darin, den Beginn einer Deflagration rechtzeitig zu erkennen und die beginnende Deflagration durch Abführen der Energie zu unterbinden. Die Erkennung kann über eine Reihe von Indikatoren erfolgen. Bekannt sind zum Beispiel die Überwachung von Temperatur oder/und Druck. Es kann aber auch das Auftreten gewisser Zersetzungsgase wie Kohlenmonoxid detektiert werden. Bei Erreichen des Auslösewertes wird die Energie aus dem System abgeführt. In der Regel erfolgt dies durch Zugabe einer größeren Menge an Wasser. Durch die Wärmekapazität des Wassers kühlt sich die deflagrierende Substanz auf Temperaturen unterhalb der Zersetzungstemperatur ab. Eine zusätzliche Wärmeabfuhr kann durch die Entstehung von Wasserdampf erfolgen. Dem Wasser kann ein Detergenz zugegeben werden, um eine gute Benetzung der deflagrierenden Substanz zu gewährleisten. Die durch die Zufuhr und Verdampfung von Wasser bedingte Volumenzunahme muss durch geeignete Einrichtungen abgeleitet werden, um einem unerwünschten Druckaufbau entgegenzuwirken.

Ein weiteres Verfahren zur Verarbeitung und Handhabung deflagrationsfähiger Stoffe wird in WO 2014/139876 A1 beschrieben. WO 2014/139876 A1 beschreibt ein Verfahren, bei welchem die Verarbeitung und / oder Handhabung der deflagrationsfähigen Feststoffe in einer Umgebung unter reduziertem Druck erfolgt. WO 2014/139876 A1 beschreibt unter anderem die Verarbeitung und Handhabung von deflagrationsfähigen Feststoffen in gängigen chemischen Verfahrensschritten, insbesondere Filtrieren, Trocknen, Mahlen, Sieben, Mischen, Homogenisieren, Granulieren, Kompaktieren, Abfüllen, Lagern und Transport in einem Transportbehälter, sowie mechanischen Transport wie z.B. die die Förderung in Förderschnecken oder durch Zellradschleusen. Besonders vorteilhaft ist das in WO 2014/139876 A1 beschriebene Verfahren für die Verarbeitung und Handhabung deflagrationsfähiger Feststoffe in Apparaten mit mechanischen Einbauten. Während WO 2014/139876 A1 detailliert die Verarbeitung deflagrationsfähiger Stoffe unter reduziertem Druck beschreibt, gibt WO 2014/139876 A1 keine Hinweise darauf, wie die deflagrationsfähigen Stoffe nach Beendigung des jeweiligen Verfahrensschrittes oder am Ende des Herstellungs- bzw. Handhabungsprozesses wieder sicher auf Umgebungsdruck gebracht werden können.

Die Aufgabe der vorliegenden Erfindung lag daher darin, ein Verfahren zu finden für die Verarbeitung und/oder Handhabung deflagrationsfähiger Feststoffe und/oder Gemische in einer Umgebung unter reduziertem Druck, welches ein sicheres Rückführen auf Umgebungsdruck ermöglicht, oder, mit anderen Worten, ein Verfahren zu finden zum sicheren Aufheben des reduzierten Drucks bei der Verarbeitung und / oder Handhabung deflagrationsfähiger Feststoffe.

Die Aufgabe wird dadurch gelöst, dass vor Aufheben des reduzierten Drucks mögliche Zündquellen abgeschaltet werden und zwischen Abschalten der Zündquelle und Aufheben des reduzierten Drucks eine Wartezeit eingehalten wird.

Überraschenderweise wurde gefunden, dass die Initiierung einer Deflagration dadurch verhindert werden kann, dass zwischen Ausschalten einer wirksamen Zündquelle und Aufheben des reduzierten Drucks eine Wartezeit eingehalten wird.

Die erfindungsgemäße Verfahren ist für die Verarbeitung und/oder Handhabung von deflagrationsfähigen Feststoffen und/oder Gemischen anwendbar, welches dadurch gekennzeichnet ist, dass die Verarbeitung und / oder Handhabung in einer Umgebung unter reduziertem Druck von <500 mbara (mbara = absoluter Druck in Millibar) erfolgt und eine Aufhebung des reduzierten Drucks erst dann erfolgt, wenn mögliche Zündquellen abgeschaltet werden und zwischen Abschalten der Zündquelle und Aufheben des reduzierten Drucks eine Wartezeit eingehalten wird, wobei die Verarbeitung und/oder Handhabung ein oder mehrere Verfahrensschritte umfasst, welche selektiert sind aus einer Gruppe umfassend Filtration, Mahlen, Sieben, Mischen, Homogenisieren, Granulieren, Kompaktieren, Abfüllen, Trocknen, Lagern und Transport in einem Transportbehälter sowie sonstige Schritte in Apparaten mit mechanischen Einbauten.

Zündquellen im Sinne dieser Erfindung sind mechanisch bewegte Einrichtungen, welche zu einer lokalen Erhitzung führen können, durch welche in der Folge eine Deflagration initiiert werden kann. Solche Zündquellen sind zum Beispiel Rührer oder sonstige bewegte Mischelemente, welche z.B. mit der Wandung oder anderen Apparateteilen in Kontakt kommen. Ein weiteres Beispiel für eine solche Zündquelle ist ein Fremdkörper (z.B. eine Schraube, welche zwischen Wandung und dem bewegten Rühr-/Mischorgan gelangt. Die Wirksamkeit einer Zündquelle im Sinne der vorliegenden Erfindung ist dadurch festgelegt, dass durch die Zündquelle eine sich selbständig fortsetzende Zersetzung (Deflagration) ausgelöst wird.

Erfindungsgemäß wird der Antrieb der mechanisch bewegten Einrichtungen, welche als Zündquelle wirken können, vor Aufhebung des reduzierten Drucks abgeschaltet. Erfindungsgemäß erfolgt die Aufhebung des reduzierten Drucks erst nach Abschalten des Antriebs.

Die Zeitspanne zwischen Ausschalten des Antriebs und Aufhebung des reduzierten Drucks im Sinne dieser Erfindung wird auch Wartezeit genannt und kann 10 bis 60 Minuten, bevorzugt 10 bis 30 Minuten betragen.

Es können im Einzelfall kürzere Zeitspannen gewählt werden. Hierzu müssen das jeweilige Deflagrationsverhalten sowie die Eigenschaften, insbesondere das Abkühlverhalten der potentiellen Zündquelle gesondert bewertet werden. Wesentlich im Sinne dieser Erfindung ist, dass Aufhebung des reduzierten Drucks nicht bei laufendem Antrieb der potentiellen Zündquelle erfolgt, sondern erst zeitversetzt nach Abschalten des Antriebs der potentiellen Zündquelle. Das erfindungsgemäße Verfahren ist vorzugsweise für die Verarbeitung und Handhabung deflagrationsfähiger fester Substanzen einschließlich explosionsfähiger fester Substanzen anwendbar.

Als deflagrationsfähig im Sinne dieser Erfindung gelten alle Stoffe, welche entweder nach dem UN Prüfbuch "Transportation of Dangerous Goods, Manual of Tests and Criteria", 5th Revised Edition, 2009, Deflagration, unter Abschnitt 23.2.2 genannten Kriterien als deflagrationsfähig einzuordnen sind (Question "Can it propagate adeflagration?" - Answer "yes, rapidely" oder" yes, slowly"), und / oder im Test VDI2263-1 bei Ausprüfung bei der in der Verarbeitung vorgesehenen Temperatur und einer Zündung von oben oder unten mit einer Zündpille, Zündwendel oder Glühkerze, letztere mit einer aufgenommenen Leistung von mindestens 40 W und einer Einwirkdauer von 300 Sekunden eine sich selbständig ausbreitende Zersetzung aufweisen, wobei die Zersetzung ein Form einer Zersetzungsfront als auch in Form von Zersetzungskanälen fortschreiten kann.

Typische deflagrationsfähigen Stoffe im Sinne der vorliegenden Erfindungen sind organische Verbindungen mit funktionellen Gruppen wie Kohlenstoff-Kohlenstoff Doppel- und Dreifachbindungen wie Acetylene, Acetylide, 1,2 Diene; gespannte Ringverbindungen wie Azirine oder Epoxide, Verbindungen mit aneinander grenzenden N-Atomen wie Azo- und Diazoverbindungen, Hydrazine, Azide, Verbindungen mit aneinander grenzenden O-Atomen wie Peroxiden und Ozoniden, Sauerstoff-Stickstoff-verbindungen wie Hydroxylamine, Nitrate, N-Oxide, 1,2 Oxalate, Nitro- und Nitroso-verbindungen; Halogen-Stickstoffverbindungen wie Chloramine und Fluoramine, Halogen-Sauerstoffverbindungen wie Chlorate, Perchlorate, Jodosyl-verbindungen; Schwefel-Sauerstoff-Verbindungen wie Sulphonylhalide, Sulphonylcyanide, und Verbindungen mit Kohlenstoff-Metall-Bindungen und Stickstoff-Metall-Bindungen wie Grignard-Reagenzien oder Organo-Lithium-Verbindungen. Deflagrationsfähige Feststoffe sind deflagrationsfähige Stoffe in fester Form, wobei der Stoff rein oder gemischt in fester Form vorliegt, z.B. als Pulver oder Granulate in beliebiger Korngröße vorhanden ist. Als deflagrationsfähige Feststoffe im Sinne dieser Erfindung gelten auch deflagrationsfähige Flüssigstoffe, welche an nicht deflagrationsfähigen Feststoffen resorbiert sind und somit in fester Form vorliegen. Als deflagrationsfähige Feststoffe im Sinne dieser Erfindung gelten ebenfalls deflagrationsfähige Stoffe in fester Form, welche noch Reste von Wasser oder andere Flüssigkeiten wie Lösungsmittel aufweisen (feuchte Feststoffe). Die Korngröße und die Korngrößenverteilung haben bekanntermaßen Einfluss auf das Deflagrationsverhalten, die beiden Parameter stellen für die vorliegende Erfindung aber keine Einschränkung dar.

Verarbeitung und Handhabung im Sinne dieser Anmeldung sind Verfahrens- und Handhabungsschritte zur Herstellung, Verarbeitung, Lagerung und dem Transport von deflagrationsfähigen Feststoffen, insbesondere Filtrieren, Trocknen, Mahlen, Sieben, Mischen, Homogenisieren, Granulieren, Kompaktieren, Abfüllen, Lagern und Transport in einem Transportbehälter, sowie mechanische Transport wie z.B. die die Förderung in Förderschnecken oder durch Zellradschleusen. Erfindungsgemäß wird das Verfahren für eine trocken mechanische Verarbeitung angewandt. Im Sinne der Erfindung können diese Verfahrensschritte sowohl in oder mit Hilfe von Apparaten, bei welchen der bearbeitete Feststoff mit Hilfe mechanischer Einrichtungen bewegt wird, wie zum Beispiel in einem Pflugscharmischer, durchgeführt werden, als auch in oder mit Hilfe von Apparaten ohne mechanische Einrichtungen, wie zum Beispiel Silos. Die Reduzierung des Drucks in den Apparaten erfolgt durch dem Fachmann bekannte Techniken mittels Unterdruckpumpen wie zum Beispiel Verdrängerpumpen, Strahlpumpen, Drehschieberpumpen, Zentrifugalpumpen, Flüssigkeitsringringpumpen, Wälzkolbenpumpen und anderen zur Erzeugung des gewünschten Drucks geeignete Aggregate.

### Beispiele

Folgende Beispiele sollen den Unterschied zwischen dem Aufheben des reduzierten Drucks bei noch wirksamer Zündquelle und dem Beibehalten des reduzierten Drucks bis zur Unwirksamkeit der Zündquelle verdeutlichen.

Es wurden Messungen zum Deflagrationsverhalten entsprechend VDI 2263 durchgeführt.

Die Messungen erfolgten in einem Metallrohr von 4,8 cm Durchmesser und 13,5 cm Höhe. Als Zündquelle diente eine im Boden des Metallrohrs (= Prüfrohr) eingelassene Glühkerze des Typs 0 250 201 032-4FS der Firma Bosch. Das Prüfrohr wurde jeweils mit der zu untersuchenden Substanz befüllt. Anschließend wurden drei 1,5 mm NiCr-Ni-Mantel-Thermoelemente mittig in der Weise in die Schüttung eingeführt, dass sich das erste Element (T1) 1 cm über der Spitze der Glühkerze und die anderen Elemente (T2 und T3) jeweils 2 cm höher befanden.

Für die Messungen wurde das Prüfrohr in einen Autoklaven von 4 l innerem Volumen und einer inneren Höhe von 15,5 cm überführt. Das Prüfrohr wurde hierzu an einer am Autoklavendeckel fixierten Stange in der Weise befestigt, dass das Prüfrohr keinen Kontakt zum Mantel des Autoklaven hatte. Autoklav und Probe befanden sich auf Raumtemperatur.

Im Autoklavendeckel befanden sich gasdichte Durchgänge für die Drähte zur Beheizung der Zündquelle und für die Thermoelemente und eine Kapillare für einen außerhalb des Autoklaven angebrachten Druckaufnehmer sowie jeweils ein Ventil zum Evakuieren des Apparates und ein Ventil für die Zufuhr von Stickstoff. Die Aufhebung des reduzierten Drucks erfolgte durch Zufuhr von Stickstoff über das entprechende Ventil. Durch die Zugabe des Inertgases Stickstoff wurde sichergestellt, dass die Messergebnisse nicht durch mögliche Oxidationsvorgänge verfälscht wurden.

Eine Messung begann mit dem zeitgleichen Anlegen einer elektrischen Leistung und dem Starten der Temperatur-Zeit-Aufzeichnung. Die eingebrachte Leistung wurde über die Dauer der Messung konstant auf 40 W geregelt. Als Zeitpunkt für die Zündung des Stoffes wurde der Temperaturanstieg am ersten Thermoelement (T1) (1 cm über der Zündquelle) gewertet. Die Temperatur am ersten Thermoelement (T1) blieb nach Beginn des Anlegens der elektrischen Leistung nahezu konstant bzw. stieg langsam um einige °C an. Bei Eintritt einer Deflagration war ein starker Temperaturanstieg von > 5°C/sec zu beobachten.

Die Temperatur an den anderen Thermoelementen (T2, T3) stieg jeweils zeitversetzt an.

### Beispiel 1 - Azodicarbonamid / Kieselgur mit sofortiger Aufhebung des reduzierten Drucks

Das oben beschriebene Prüfrohr wurde mit 50 g eines Gemisches aus Azodicarbonamid (ADCA) und Kieselgur (jeweils 50 Gew.-%) gefüllt. Das Prüfrohr wurde in den Autoklaven überführt. Der Autoklav wurde auf einen Druck von 100 mbar evakuiert, die Unterdruckquelle wurde nach Erreichen des Zieldrucks abgetrennt. Die am Boden des Prüfrohrs in das Substanzgemisch ragende Glühkerze wurde mit einer Leistung von 40 Watt für 60 Sekunden erhitzt.

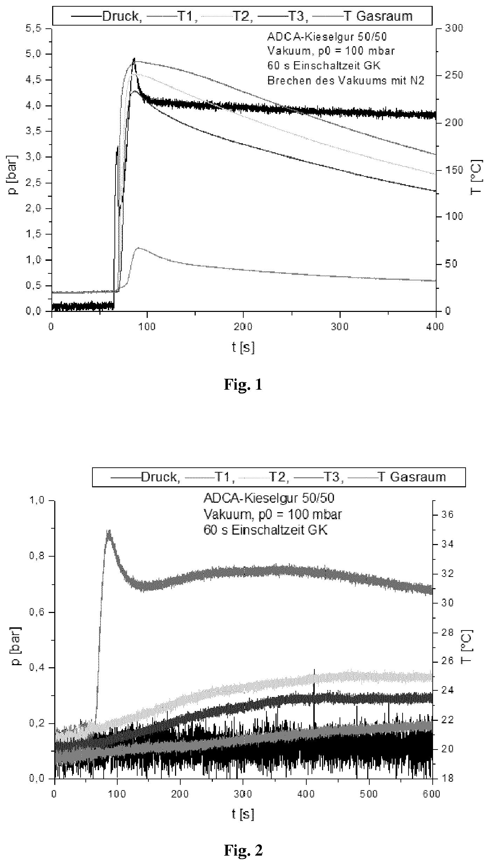

Unmittelbar nach Beendigung der Energiezufuhr zu der Glühkerze wurde der reduzierte Druck durch Zugabe von Stickstoff aufgehoben. Die Druckdifferenz zum Umgebungsdruck wurde innerhalb von etwa 2 Sekunden ausgeglichen. Etwa 10 Sekunden nach Beginn der Stickstoffzufuhr stieg die Temperatur der Thermoelemente T1, T2 und T3 stark auf ca. 250 °C an (Fig. 1). Die Substanz deflagrierte mit einer Geschwindigkeit von etwa 9 mm/sec.

Beispiel 1 zeigt, dass bei Aufheben des reduzierten Drucks unmittelbar nach Ausschalten der Zündquelle eine Deflagration ausgelöst wird (Fig. 1).

### Beispiel 2 - Azodicarbonamid / Kieselgur mit zeitlich verzögerter Aufhebung des reduzierten Drucks

Das oben beschriebene Prüfrohr wurde mit 50 g eines Gemischs aus Azodicarbonamid (ADCA) und Kieselgur (jeweils 50 Gew.-%) gefüllt. Das Prüfrohr wurde in den Autoklaven überführt. Der Autoklav wurde auf einen Druck von 100 mbar evakuiert, die Unterdruckquelle wurde nach Erreichen des Zieldrucks abgetrennt. Die am Boden des Prüfrohrs in das Substanzgemisch ragende Glühkerze wurde mit einer Leistung von 40 Watt für 60 Sekunden erhitzt. Nach Beendigung der Energiezufuhr zu der Glühkerze wurde der Unterdruck beibehalten.

Es war keine Deflagration zu beobachten. Die Temperatur an den Thermoelementen blieb unter 35 °C (T1) bzw. unter 25 °C (T2, T3), der Druck blieb konstant bei 0,1 bar (Fig. 2). 10 Minuten nach Beendigung der Energiezufuhr zu der Glühkerze wurde der reduzierte Druck durch Zugabe von Stickstoff aufgehoben. Die Druckdifferenz zum Umgebungsdruck wurde innerhalb von etwa 2 Sekunden ausgeglichen. Auch im Anschluss an die Aufhebung des reduzierten Drucks war keine Deflagration zu beobachten (Fig. 2).

Beispiel 2 zeigt, dass bei Einhalten einer Wartezeit zwischen Ausschalten der Zündquelle und Aufhebung des reduzierten Drucks eine Deflagration vermieden wird (Fig. 2).

### Beispiel 3 - Tolylfluanid mit sofortiger Aufhebung des reduzierten Drucks

Das oben beschriebene Prüfrohr wurde mit 50 g eines Gemischs aus Tolylfluanid und Kieselgur (jeweils 50 Gew.-%) gefüllt. Das Prüfrohr wurde in den Autoklaven überführt. Der Autoklav wurde auf einen Druck von 100 mbar evakuiert, die Unterdruckquelle wurde nach Erreichen des Zieldrucks abgetrennt. Die am Boden des Prüfrohrs in das Substanzgemisch ragende Glühkerze wurde mit einer Leistung von 40 Watt für 130 Sekunden erhitzt.

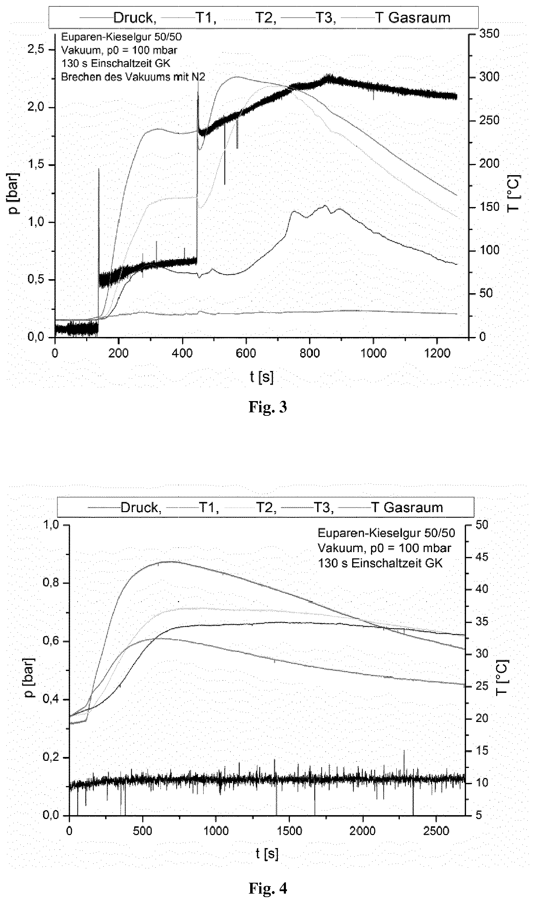

Unmittelbar nach Beendigung der Energiezufuhr zu der Glühkerze wurde der Druck durch Zugabe von Stickstoff erhöht (Fig. 3). Die Druckanzeige stieg auf etwa 500 mbar und stieg innerhalb der nächsten 300 Sekunden auf etwa 700 mbar an. Die Temperatur am Thermoelement T1 stieg innerhalb von 250 Sekunden auf etwa 250 °C an und verblieb dann bei diesem Wert. Die Temperatur am Thermoelement T2 stieg auf etwa 150 °C und die Temperatur des Thermoelements T3 auf etwa 70°C. Nach 300 Sekunden wurde erneut Stickstoff zugegeben. Der Druck stieg unmittelbar auf 2 bar an, die Temperatur am Temperaturfühler T1 stieg innerhalb von 200 Sekunden auf 300 °C an, die am Thermoelement T2 zeitverzögert auf etwa 270 °C und die am Thermoelement T3 zeitverzögert auf etwa 130 °C (Fig. 3).

Beispiel 3 zeigt, dass bei Aufheben des reduzierten Drucks unmittelbar nach Ausschalten der Zündquelle eine Deflagration ausgelöst wird. Beispiel 3 zeigt ferner, dass bei einer stufenweisen Aufhebung des reduzierten Drucks die Deflagration bei der niedrigeren Druckstufe deutlich langsamer erfolgt (Fig. 3).

### Beispiel 4 - Tolylfluanid mit zeitlich verzögerter Aufhebung des reduzierten Drucks

Das oben beschriebene Prüfrohr wurde mit 50 g eines Gemischs aus Tolylfluanid (50%) und Kieselgur (jeweils 50 Gew.%) gefüllt. Das Prüfrohr wurde in den Autoklaven überführt. Der Autoklav wurde auf einen Druck von 100 mabr evakuiert. Die Unterdruckquelle wurde nach Erreichen des Zieldrucks abgetrennt. Die am Boden des Prüfrohrs in das Substanzgemisch ragende Glühkerze wurde mit einer Leistung von 40 Watt für 130 Sekunden erhitzt. Nach Beendigung der Energiezufuhr zu der Glühkerze wurde der Unterdruck beibehalten.

Es war keine Deflagration zu beobachten (Fig. 4). Die Temperatur an den Thermoelementen blieb unter 45 °C (T1) bzw. unter 35 °C (T2, T3). Der Druck blieb konstant bei 100 mbar. Etwa 50 Minuten nach Beendigung der Energiezufuhr zu der Glühkerze wurde der reduzierte Druck durch Zugabe von Stickstoff aufgehoben. Die Druckdifferenz zum Umgebungsdruck wurde innerhalb von etwa 2 Sekunden ausgeglichen.

Beispiel 4 zeigt, dass bei Einhalten einer Wartezeit zwischen Ausschalten der Zündquelle und Aufhebung des reduzierten Drucks eine Deflagration vermieden wird (Fig. 4).

## Patentansprüche

1. Verfahren zur Verarbeitung und/oder Handhabung von deflagrationsfähigen Feststoffen und/oder Gemischen, **dadurch gekennzeichnet, dass** die Verarbeitung und/oder Handhabung in einer Umgebung unter reduziertem Druck von <500 mbara erfolgt und eine Aufhebung des reduzierten Drucks erst dann erfolgt, wenn eine Zündquelle abgeschaltet ist und zwischen Abschalten der Zündquelle und Aufheben des reduzierten Drucks eine Wartezeit eingehalten wird.

2. Verfahren nach Anspruch 1, **dadurch gekennzeichnet, dass** die Verarbeitung und/oder Handhabung ein oder mehrere Verfahrensschritte umfasst, welche selektiert sind aus einer Gruppe umfassend aus Filtration, Mahlen, Sieben, Mischen, Homogenisieren, Granulieren, Kompaktieren, Abfüllen, Trocknen, Lagern und Transport in einem Transportbehälter sowie sonstige Schritten in Apparaten mit mechanischen Einbauten.

3. Verfahren nach Anspruch 1 oder 2, **dadurch gekennzeichnet, dass** die Zeitspanne zwischen Ausschalten des Antriebs und Aufhebung des reduzierten Drucks 10 bis 60 Minuten beträgt.

4. Verfahren nach Anspruch 1 oder 2, **dadurch gekennzeichnet, dass** die Zeitspanne zwischen Ausschalten des Antriebs und Aufhebung des reduzierten Drucks 10 bis 30 Minuten beträgt.

5. Verfahren nach Anspruch 1 bis 4, **dadurch gekennzeichnet, dass** der deflagrationsfähige Feststoff ausgewählt ist aus der Gruppe umfassend Acetylene, Acetylide, 1,2 Diene, Azirine, Epoxide, Azo-, Diazoverbindungen, Hydrazine, Azide, Peroxiden, Ozoniden, Hydroxylamine, Nitrate, N-Oxide, 1,2 Oxalate, Nitro- und Nitroso-verbindungen, Chloramine, Fluoramine, Chlorate, Perchlorate, Jodosyl-Verbindungen, Sulphonylhalide, Sulphonylcyanide, Grignard-Reagenzien und Organo-Lithium-Verbindungen.

6. Verfahren nach Anspruch 1 bis 4, **dadurch gekennzeichnet, dass** das Gemisch aus mindestens einem deflagrationsfähigen Stoff besteht, ausgewählt aus der Gruppe umfassend Acetylene, Acetylide, 1,2 Diene, Azirine, Epoxide, Azo-, Diazoverbindungen, Hydrazine, Azide, Peroxiden, Ozoniden, Hydroxylamine, Nitrate, N-Oxide, 1,2 Oxalate, Nitro- und Nitroso-verbindungen, Chloramine, Fluoramine, Chlorate, Perchlorate, Jodosyl-Verbindungen, Sulphonylhalide, Sulphonylcyanide, Grignard-Reagenzien und Organo-Lithium-Verbindungen.

7. Verfahren nach Anspruch 1 bis 6, **dadurch gekennzeichnet, dass** der deflagrationsfähige Feststoff und/oder das Gemisch ein Pulver oder Granulat ist.

8. Verfahren nach Anspruch 1 bis 7, **dadurch gekennzeichnet, dass** der deflagrationsfähige Feststoff und/oder das Gemisch aus mindestens einer deflagrationsfähigen Flüssigkeit besteht, welche an nicht deflagrationsfähigen Feststoffen resorbiert sind und somit in fester Form vorliegen.

9. Verfahren nach Anspruch 1 bis 8, **dadurch gekennzeichnet, dass** die Zündquelle eine mechanisch bewegte Einrichtung ist, welche zu einer lokalen Erhitzung führen kann.
